# EUROPÄISCHE PATENTSCHRIFT

(11) **EP 1 020 112 B1**
(45) Veröffentlichungstag und Bekanntmachung des Hinweises auf die Patenterteilung: **07.01.2004**
(21) Anmeldenummer: 99123255.4
(22) Anmeldetag: 29.11.1999
(51) Int. Cl.: A01K 1/015

(54) **Tierstreu**
Animal litter
Litière pour animaux

(30) Priorität: 12.01.1999 DE 19900812
(43) Veröffentlichungstag der Anmeldung: 19.07.2000
(73) Patentinhaber: SÜD-CHEMIE AG, 80333 München (DE)
(72) Erfinder: Simmler-Hübenthal, 85368 Moosburg (DE); Haubensak, Otto Dr., 83098 Brannenburg (DE); Lehmann, Günter, 93346 Ihlerstein (DE); Winkhaus, Christine, 47546 Kalkar (DE); Bruins, Hans-Kervin, 7039 AA Stokkum (NL)
(74) Vertreter: Splanemann Reitzner Baronetzky Westendorp Patentanwälte

(56) Entgegenhaltungen:
- EP-A- 0 247 946
- WO-A-91/10357
- WO-A-98/27261
- GB-A- 878 423
- US-A- 5 415 131
- US-A- 5 526 770

## Beschreibung

Die Erfindung betrifft eine neuartige Tierstreu, enthaltend einen oder mehrere Signalduftstoffe, die eine verbesserte Attraktivität für das Haustier aufweisen und besser als "Toilette" akzeptiert werden, sowie ein Verfahren zu deren Herstellung.

Haustiere, insbesondere Katzen, werden aus Gründen der Hygiene und der Vermeidung von Gerüchen daran gewöhnt, eine mit einer Tierstreu (Einstreu) versehene Stelle, insbesondere eine Schale oder Box, als Toilette zu benutzen.

Als Tierstreu werden gemäß dem Stand der Technik eine große Vielzahl unterschiedlicher Materialien verwendet. So werden einmal organische Substanzen, wie Stroh, Sägemehl, Holzspäne, Rinden, poröse Kunststoffperlen, geshreddertes Papier, Cellulosefasern, Agrarabfälle, Polyacrylate usw. alleine oder in Mischungen mit anorganischen Materialien eingesetzt. Als anorganische Materialien können u.a. silicatische Materialien wie natürliche und synthetische Tone (z.B. Bentonit, Attapulgit, Sepiolith, Kaolin), Diatomeenerden, Mica, Talk, Sand, Quarzmehl, Flugasche, Calciumcarbonat, Aktivkohle und dergleichen verwendet werden. Eine Übersicht über die verwendeten Materialien offenbart die US-Patentschrift 5,188,064 (vgl. Sp.1, Z.19 bis Sp.2, Z.29).

Diese Materialien sind entweder geruchlos oder weisen einen für den Haustierhalter angenehmen Eigengeruch auf, wie beispielsweise Tierstreumaterialien auf der Basis von Stroh, Heu oder Holzspänen.

Um eine angemessene Hygiene und Stubenreinheit der Haustiere in der Praxis zu erzielen, ist eine hohe "Akzeptanz" der Toilette und insbesondere der in dieser enthaltenen Einstreu durch das Haustier erforderlich. Obwohl gerade Katzen sehr reinliche Tiere sind, müssen auch sie lernen, welcher Platz zur Nutzung als Toilette für sie vorgesehen ist. Normalerweise lernen junge Katzen durch das Vorbildverhalten ihrer Mutter innerhalb der ersten Lebensmonate, Harn und Kot an dem dafür vorgesehenen Ort abzusetzen und zu verscharren (siehe B. Beaver in Veterinary Aspects of feline behaviour, 1980, Kap. 8). Aber nicht nur das Vorbildverhalten des Muttertieres ist wichtig. Auch Geruchsmerkmale spielen für die Entwicklung des Toilettenverhaltens eine wichtige Rolle.

Oft ist jedoch das zur festen und ausschließlichen Verwendung einer bestimmten Stelle als Toilette notwendige Verhalten des Haustieres nicht hinreichend ausgeprägt, wofür verschiedene Ursachen angeführt werden können, wie rassentypisches Verhalten, zu frühe Trennung der Jungkatzen vom Muttertier, Veränderungen in der Umgebung der Katze, Ortswechsel der Katze, Wechsel des als Einstreu benutzten Adsorbensmaterials usw..

Auch bei einer Umstellung in der Haltung von Katzen, z.B. wenn ein Tier plötzlich ausschließlich in der Wohnung gehalten wird, während vorher Auslauf möglich war, entstehen oft Probleme mit Hygiene und Sauberkeit.

Zusammenfassend besteht ein starkes Bedürfnis nach einer Tierstreu mit hoher Attraktivität für das Haustier, um die vom Tierhalter gewünschte Sauberkeit zu erzielen und Hygieneprobleme zu verringern bzw. zu vermeiden.

Die im Stand der Technik beschriebenen Tierstreumaterialien sind in der Meyel darauf ausgerichtet, möglichst unangenehme Gerüche zu adsorbieren bzw. die Entstehung unangenehmer Gerüche und deren Freisetzung zu vermeiden.

So werden beispielsweise gemäß der DE 298 06 189 U1 in einer Tierstreu Hanfschäben sowie frische Baumrinde, von denen desinfizierende sowie einen angenehmen Geruch verbreitende Wirkung erwartet wird, zugegeben. Weiterhin wird Bacillus subtilis verwendet, um eine Ammoniakbildung, und damit eine unangenehme Geruchsbildung, zu vermeiden.

Gemäß der DE 41 09 590 A1 wird ein Tierstreugranulat auf der Basis eines synthetisch hergestellten Calciumsilicathydrates mit einem neutralen Salz oder Salzgemisch besprüht, um die Geruchsbindekapazität zu erhöhen.

Weiterhin werden den Tierstreuen häufig anti-bakterielle Substanzen zugesetzt, um die Zersetzung der Fäkalien und die resultierende Entstehung unangenehmer Gerüche zu vermeiden.

Die US-5,415,131 beschreibt pheromonhaltige Tierstreuzusammensetzungen, wobei Pheromone solche Substanzen bezeichnen, die zur Kommunikation zwischen unterschiedlichen Tieren (der selben Spezies) dienen.

Der vorliegenden Erfindung liegt die Aufgabe zugrunde, eine Tierstreu bereitzustellen, die eine hohe Attraktivität für das Haustier aufweist und mit hoher Akzeptanz als Ort für die Ausscheidung und den Verbleib von Kot und Harn angenommen wird.

Überraschenderweise wurde nun gefunden, daß eine solche Streu erhalten werden kann, wenn diese ein oder mehrere Signalduftstoffe gemäß Anspruch 1 enthält.

So wurde gefunden, daß durch die Aufnahme dieser Signalduftstoffe, die auch als Komponenten in Fäkalien und deren Abbauprodukten vorkommen, eine sehr hohe Attraktivität der Tierstreu für das Haustier erzielt werden kann. Durch die Verwendung dieser Signalduftstoffe wird die Toilette eigenständig und sogar instinktiv von dem Haustier erkannt und aufgesucht. Es werden also erfindungsgemäß solche Signalduftstoffe verwendet, die das Instinktverhalten des Haustiers beeinflussen und diesem den Ort für die Ausscheidung und den Verbleib von Kot und Harn signalisieren.

Es wurde weiterhin gefunden, daß es möglich ist, die Signalduftstoffe in einer Menge in der Tierstreu zu verwenden, die von dem Haustier gut wahrgenommen wird, ohne daß für den Heimtierhalter ein unangenehmer Geruch wahrnehmbar ist. Dabei macht sich die Erfindung zunutze, daß das Geruchsempfinden der meisten Haustiere, z.B. von Katzen, wesentlich stärker ausgeprägt ist als beim Menschen, so daß es möglich ist, eine Tierstreu mit einer Menge der vorstehenden geruchsaktiven Signalduftstoffe zu behandeln, die zwar für das entsprechende Haustier deutlich wahrnehmbar ist, für den Menschen jedoch nicht bzw. fast nicht.

Daher betrifft die Erfindung nach einem ersten Aspekt eine Tierstreu, enthaltend einen oder mehrere Signalduftstoffe gemäß Anspruch 1 in einer Konzentration, die vom Haustier wahrgenommen wird, im wesentlichen jedoch nicht vom Menschen.

Es wurde gefunden, daß die aus den vorstehenden Stoffklassen ausgewählten Signalduftstoffe eine hohe Attraktivität für die Tiere aufweisen und deren instinktive Erkennung einer Toilette beeinflussen.

Insbesondere werden solche Signalduftstoffe der vorstehenden Gruppe verwendet, die auch im Kot und Harn der Tiere vorkommen. Solche Signalduftstoffe können vom Fachmann leicht anhand von gaschromatogrpahischen und massenspektrometrischen Untersuchungen von Geruchsstoffen aus Tierfäkalien (vgl. z.B. VDI-Berichte 226, 1975 "Gaschromatographisch-massenspektrometrische Untersuchungen von Geruchsstoffen aus der Tierhaltung", Dr. P. Schreier, Freising/Weihenstephan, S. 127-130) ausgewählt werden. Es können jedoch auch Signalduftstoffe aus anderen Quellen verwendet werden.

Da Haustiere, wie Katzen, über einen erheblich besseren Geruchssinn als der Mensch verfügen, ist es in der Regel leicht möglich, eine Konzentration zu wählen, die vom menschlichen Geruchsorgan nicht mehr (als unangenehm) wahrgenommen wird, jedoch für das Haustier noch gut als Signalduftstoff wahrnehmbar ist. Der entsprechende Konzentrationsbereich ist von dem bestimmten Signalduftstoff und dem jeweiligen Trägermaterial abhängig und kann durch einfache routinemäßige Versuche durch den Fachmann für die jeweilige Kombination von Signalduftstoffen und Trägermaterial bestimmt werden. Beispielsweise kann durch einfache Titration verschiedener Signalduftstoffverdünnungen auf dem Trägermaterial die Konzentration des Signalduftstoffs bestimmt werden, die der jeweiligen "Geruchsschwelle" des Menschen entspricht. Es kann somit eine Konzentration gewählt werden, die etwas unter der "Geruchsschwelle" des Menschen, aber immer noch deutlich über der des Haustieres liegt. Diese Konzentration kann dann in der erfindungsgemäßen Tierstreu verwendet werden. Allgemein wurde gefunden, daß der vorstehende brauchbare Konzentrationsbereich zwischen etwa 0,01 und 100 ppm liegt.

Weiterhin wurde gefunden, daß im Gegensatz zur Verwendung von Fäkalien als solchen als Geruchsstoffquelle die vorstehenden Signalduftstoffe keine der gewünschten Attraktivität bzw. Akzeptanz entgegenwirkenden, d.h. für das Haustier unangenehme oder abschreckende Wirkung, aufweisen.

So hat sich herausgestellt, daß durch die Verwendung der erfindungsgemäßen Signalduftstoffe in der Tierstreu eine sehr hohe Attraktivität und Akzeptanz für das Haustier erzielt werden kann, die noch über der mit dem gesamten Geruchsstoffkomplex (Fäkalien als solchen) erzielten Akzeptanz liegt.

Zudem ist durch die Verwendung von bestimmten Signalduftstoffen im Vergleich zur Verwendung von Fäkalien als solchen die Hygiene der Tierstreu sichergestellt.

Nach einer bevorzugten Ausführungsform sind die Signalduftstoffe in einer Menge von (jeweils) 0,05 bis 10 ppm, vorzugsweise von 0,1 bis 1,0 ppm, und insbesondere von 0,1 bis 0,5 ppm, enthalten.

Es wurde gefunden, daß als Signalduftstoff(e) eine oder mehrere aus der Gruppe von Indol, 3-Methylindol (Skatol), 3-Mercapto-3-methyl-1-butanol oder Derivate davon in einer Menge von 0,01 bis 100 ppm das Toilettenverhalten der Haustiere besonders günstig beeinflussen, d.h. eine hohe Attraktivität für die Tiere aufweisen, wodurch eine verbesserte Hygiene und Sauberkeit erzielt werden kann.

Es wurde auch gefunden, daß nach einer weiteren bevorzugten Ausführungsform der Erfindung die erfindungsgemäßen Vorteile insbesondere bei Katzen besonders ausgeprägt waren, wenn die Tierstreu zumindest Indol und/oder Skatol oder deren Derivate enthielt.

Erfindungsgemäß kann von jedem beliebigen Tierstreumaterial ausgegangen werden. Im Stand der Technik sind, wie oben erwähnt, eine Vielzahl solcher Materialien beschrieben worden. Eine beispielhafte Aufzählung ist in der US-Patentschrift 5,188,064 (vgl. Sp.1, Z.19 bis Sp.2, Z.29) enthalten, auf die hier ausdrücklich Bezug genommen wird und die Teil der vorliegenden Offenbarung ist.

Bevorzugt werden Tierstreumaterialien verwendet, die ein Adsorbens bzw. ein Trägermaterial mit einer spezifischen Oberfläche von mindestens 50 m²/g, insbesondere von mindestens 100 m²/g, enthalten. Materialien mit solchen hohen spezifischen Oberflächen zeigten eine besonders vorteilhafte, gleichmäßige und langanhaltende Freisetzung der Signalduftstoffe. Die spezifische Oberfläche wird an einem nach DIN/ISO-787/2 über einen Zeitraum von 2 Stunden bei 150°C getrocknetem Material nach der BET-Methode (Einpunktmethode mit Stickstoff gemäß DIN 66131) ermittelt.

Insbesondere wird nach einer bevorzugten Ausführungsform eine Tierstreu verwendet, die ein smektitisches Schichtsilicat enthält. Es wurde gefunden, daß bei einem solchen Trägermaterial eine besonders vorteilhafte gleichmäßige und langanhaltende Freisetzung der Geruchsstoffe erfolgt. So ist eine konstante und langanhaltende Wirksamkeit sichergestellt.

Als smektitische Tonminerale können beispielweise Schichtsilicate der Montmorillonit-Gruppe, wie Bentonit, aber auch Hectorit, Glauconit, Sauconit oder Illit verwendet werden. Bevorzugt sind auch Palygorskit (Attapulgit) und Sepiolith. Auch synthetische Silicate und Polykieselsäuren können verwendet werden. Genauso sind Gemische verschiedener Tonmineralien für die Erfindung brauchbar.

Nach einer bevorzugten Ausführungsform geht man von einem Ca- und/oder Na-Smektit, insbesondere von einem Ca- und/oder Na-Bentonit mit einer Wasseraufnahmefähigkeit (bezogen auf das Trockengewicht) von mindestens etwa 60%, vorzugsweise von mindestens etwa 120%, insbesondere von etwa 120 bis 300% und einem Smektitgehalt von etwa 50 bis 95 Gew.-% aus. Neben dem Smektit kann das smektitische Tonmineral andere Begleitmineralien, wie Glimmer, Feldspat und Quarz enthalten.

Nach einer weiteren bevorzugten Ausführungsform enthält die Tierstreu ein Sorptionsmittel auf der Basis von cellulosehaltigem Material und/oder mindestens einem smektitischen Tonmineral.

Bevorzugt ist die Tierstreu mit dem (den) Signalduftstoff(en) durch Aufsprühen imprägniert, so daß zumindest die Teilchenoberflächen den (die) Signalduftstoff(e) enthalten. Nach einer bevorzugten Ausführungsform wird zum Aufsprühen eine wäßrige Lösung mit einer Konzentration von jeweils 0,001 bis 0,01% der Signalduftstoffe verwendet. In vielen Fällen ist es vorteilhaft, einen Lösungsvermittler, insbesondere einen Alkohol wie Isopropanol, in die Lösung aufzunehmen.

Nach einer besonders bevorzugten erfindungsgemäßen Ausführungsform enthält die Tierstreu jeweils 0,36 ppm Buttersäure, Indol und Skatol als Signalduftstoffe.

Nach einem weiteren Aspekt liefert die Erfindung ein Verfahren zur Herstellung einer Tierstreu mit hoher Attraktivität für das Haustier, die einen oder mehrere der vorstehend erwähnten Signalduftstoffe enthält, wobei die Tierstreu mit einer Lösung der Signalduftstoffe behandelt wird. Vorzugsweise wird dabei eine wäßrige Lösung verwendet. Nach einer bevorzugten Ausführungsform wird diese Lösung auf die Tierstreu aufgesprüht. Aus praktischen Gründen wird es häufig vorteilhaft sein, die Signalduftstofflösung auf eine fertige herkömmliche Tierstreu, z.B. ein Tierstreugranulat, aufzusprühen. Die Signalduftstoffe können jedoch prinzipiell bei jedem beliebigen Herstellungsschritt in die Tierstreu bzw. deren Ausgangsstoffe eingebracht werden. Wie vorstehend erwähnt, kann es in vielen Fällen vorteilhaft sein, daß die Lösung einen Lösungsvermittler, wie einen Alkohol (z.B. Isopropanol oder Ethanol) enthält.

Nach einem weiteren Aspekt betrifft die vorliegende Erfindung eine Katzenhygienebox mit einer erfindungsgemäßen Tierstreu, die eine verbesserte Attraktivität für das Haustier aufweist und eigenständig bzw. instinktiv von diesem als Toilette erkannt und benutzt wird.

Schließlich betrifft die Erfindung nach einem weiteren Aspekt die Verwendung der vorstehenden Signalduftstoffe zur Verbesserung der Attraktivität und Akzeptanz einer Tierstreu für ein Haustier. Die vorzugsweise verwendeten Signalduftstoffe und deren Konzentrationen entsprechen den vorstehenden Angaben.

Die erfindungsgemäßen Streumaterialien können weitere Zusatzstoffe, wie sie im Stand der Technik bekannt bzw. dem Fachmann geläufig sind, und die eine bestimmte Nützlichkeit erfüllen, enthalten. Beispielsweise können Weißpigmente, Desinfektionsmittel sowie weitere Hilfsstoffe enthalten sein.

Die Erfindung wird nun zur besseren Veranschaulichung durch die nachstehenden Beispiele erläutert.

### Beispiel 1

### 1. Herstellung von Tierstreumaterialien

Es wurde eine klumpende Tierstreu (nachstehend kurz als "Bentonitstreu" bezeichnet) nach dem Stand der Technik wie folgt hergestellt:

320 g grubenfeuchter bayerischer Calciumbentonit werden in einem Werner-Pfleiderer-Mischer 1 Minute unter Zugabe einer kleinen Menge destillierten Wassers vorgeknetet. Die Energieaufnahme beträgt 2 kWh/to. Ziel des Vorknetens ist die Homogenisierung des Bentonits und seine Überführung in eine plastische, gut knetbare Masse. Der ideale Wassergehalt wird erfahrungsgemäß durch Zugabe von soviel Wasser eingestellt, daß bei der Verknetung ein "schmatzendes" Geräusch entsteht und der Rohbentonit Plastilin ähnelt. Dies ist meist bei einem Wassergehalt von 30 bis 35 Gew.-% der Fall. Danach wird 5 Minuten weitergeknetet; der plastilinartige Zustand wird erhalten, indem man bei Bedarf etwas Wasser zugibt. Der geknetete Bentonit wird in etwa 1 bis 1,5 cm große Stücke zerkleinert, in eine Porzellanschale gegeben und im Umlufttrockenschrank 1 bis 2 Stunden bei 80 bis 85°C auf einen Wassergehalt von 4 bis 8 Gew.-% getrocknet. Es wird die Granulatfraktion zwischen 1 und 5 mm abgesiebt, wobei der Anteil der Fraktion von 2 bis 5 mm mehr als etwa 80% und der Anteil der Fraktion von 1 bis 2 mm etwa 20% beträgt.

Weiterhin wurde eine Tierstreu auf der Basis von Bentonit und cellulosehaltigem Material nach dem Stand der Technik (vgl. DE 196 53 152.7) wie folgt hergestellt:

Etwa 2 kg einer Mischung, bestehend aus 50 Gew.-% aufgemahlenem Holzmehl (etwa 10 Gew.-% Wasser, Partikelgröße etwa 0,5 mm), und 50 Gew.-% einer gemahlenen Mischung aus 20 Gew.-% Ca-Bentonit und 30 Gew.-% Na-Bentonit (Wasseraufnahmefähigkeit des Bentonitgemisches etwa 200%) mit einem Wassergehalt von etwa 12,5 Gew.-% wird durch Zusatz von Wasser auf einen Feuchtigkeitsgehalt von 30,2 Gew.-% eingestellt. Das Holzmehl und die Bentonitmischung werden innig miteinander vermischt und in einer Flachmatrizenpresse der Firma Kahl (Typ 14-175) durch Preßformen verdichtet. Diese Flachmatrizenpresse ist im wesentlichen ein zylindrisches Gefäß mit einem Innendurchmesser von etwa 20 cm mit einer gelochten Bodenplatte (Lochdurchmesser 3mm), in welchem zwei um die Zylinderachse umlaufende Walzen vorgesehen sind. Die Walzen üben auf die feuchte Mischung aus Holzmehl und Bentonitgemisch einen Preßdruck aus, wodurch die feuchte Mischung durch die gelochte Bodenplatte gepreßt wird. Der Energieeintrag beträgt etwa 6 kWh/to. Die durch die Lochplatte hindurchtretenden Formkörper werden durch eine unterhalb der Lochplatte angeordnete Schneidevorrichtung (Abstreifer) quer zu ihrer Längsachse in Stücke mit einer Länge von etwa 3 mm zerteilt. Bereits bei der Zerteilung treten auch kleinere Bruchstücke auf. Das erhaltene Granulat wird etwa 6 Stunden bei 80° C bis auf einen Restwassergehalt von 4,5 Gew.-% getrocknet, wobei es bereits bei einem geringen Druck zerbröselt. Das Granulat wird gesiebt, wobei der Feinanteil (< 0,5 mm) etwa 30% beträgt.

### 2. Imprägnierung der Tierstreumaterialien

Es wurde eine wäßrige Lösung hergestellt, enthaltend 0,003% Buttersäure, 0,003% Indol, 0,003% 3-Methylindol (Skatol) sowie 10% Isopropanol als Lösungsvermittler.

Von dieser Lösung wurden 20 ml auf 10 kg der wie vorstehend beschrieben hergestellten Tierstreumaterialien aufgesprüht, was einer Gesamtmenge an Signalduftstoffen von 0,18 ppm entspricht.

### 3. Untersuchung der Wirkung auf Haustiere

Insgesamt 77 Katzen, welche zum Teil einzeln, zum Teil in Gruppen von 2 - 4 Tieren gehalten wurden, wurden über einen Zeitraum von 10 Tagen jeweils 2 Toiletten nebeneinander angeboten. Eine enthielt die wie vorstehend unter Punkt 1 beschrieben hergestellte herkömmliche Tierstreu ohne Signalduftstoffe, die andere die mit 0,18 ppm Signalduftstoffen imprägnierte Tierstreu.

Über den Beobachtungszeitraum hinweg wurde erfaßt, wie häufig die jeweilige Toilette von der/den Katze/n benutzt wurde. Anhand der täglich entfernten Klumpen aus den jeweiligen Toiletten konnten die Beobachtungen verifiziert werden.

Die Ergebnisse sind in Tabelle 1 aufgeführt.

72% der Katzen benutzten ausschließlich oder überwiegend die Katzentoilette, welche die imprägnierte Streu enthielt. 28% der Katzen zeigten keine Bevorzugung einer bestimmten Streu. In keinem Fall wurde die imprägnierte Streu abgelehnt.

Die Ergebnisse bei Verwendung der wie vorstehend beschrieben hergestellten Tierstreu auf der Basis von Bentonit und cellulosehaltigem Material (nicht dargestellt) waren vergleichbar.

### Beispiel 2

Beispiel 1 wurde mit der Maßgabe wiederholt, daß von der in Beispiel 1 beschriebenen Signalduftstoff-Lösung 40 ml auf 10 kg der Tierstreumaterialien aufgesprüht wurden, was einer Gesamtmenge an Signalduftstoffen von 0,36 ppm entspricht.

Genauso wurde die in Beispiel 1 beschriebene Untersuchung mit 75 Katzen wiederholt. Die Ergebnisse sind für die Bentonitstreu in Tabelle 1 enthalten.

79% der Katzen benutzten ausschließlich oder überwiegend die Katzentoilette, welche die imprägnierte Streu enthielt. 21% der Katzen zeiten keine Bevorzugung einer bestimmten Streu. In keinem Fall wurde die imprägnierte Streu abgelehnt.

Die Ergebnisse für die cellulosehaltiges Material enthaltende Tierstreu (vgl. Beispiel 1, Punkt 1 oben) waren praktisch identisch.

### Beispiel 3

Beispiel 1 wurde wiederholt, mit der Maßgabe, daß zur Imprägnierung eine wäßrige Signalduftstoff-Lösung hergestellt wurde, enthaltend 0,003% 3-Methylindol (Skatol), 0,002% 3-Mercapto-3-methyl-1-butanol, sowie 10% Isopropanol als Lösungsvermittler.

Von dieser Lösung wurden 40 ml auf 10 kg der wie in Beispiel 1 beschrieben hergestellten Tierstreumaterialien aufgesprüht, was einer Gesamtmenge an Signalduftstoffen von 0,2 ppm entspricht.

Die in Beispiel 1 beschriebene Untersuchung wurde mit 74 Katzen wiederholt.

Die Ergebnisse für die Bentonitstreu sind in Tabelle 1 enthalten.

84% der Katzen benutzten ausschließlich oder überwiegend die Katzentoilette, welche die imprägnierte Streu enthielt. 16% der Katzen zeigten keine Bevorzugung einer bestimmten Streu. In keinem Fall wurde die imprägnierte Streu abgelehnt.

Die Ergebnisse für die cellulosehaltiges Material enthaltende Tierstreu (vgl. Beispiel 1, Punkt 1 oben) waren vergleichbar.

**Tabelle I**

| | | Streu mit Duftstoff Bevorzugung [%] | Streu ohne Duftstoff Bevorzugung [%] |
|---|---|---|---|
| **A** | **Bentonitstreu + 0,18 ppm** (Buttersaure + Indol + Skatol) | 72 | 28 |
| | | | |
| **B** | **Bentonitstreu + 0,36 ppm** (Buttersaure + Indol + Skatol) | 79 | 21 |
| | | | |
| **C** | **Bentonitstreu * 0,20 ppm** (Skatol + 3-Mercapto-3-Methyl-1-Butanol) | 84 | 16 |

Bei Auftropfen einiger Tropfen der in Beispiel 1 beschriebenen wäßrige Signalduftstofflösung auf Zeitungspapier entstand zunächst über etwa 2 Tage ein auch für den Menschen deutlich wahrnehmbarer, sehr unangenehmer Geruch. Eine die Attraktivität für das Heimtier steigernde Wirkung war im Gegensatz zu den vorstehenden erfindungsgemäßen Tierstreumaterialien bereits nach 14 Tagen nicht mehr feststellbar.

## Patentansprüche

1. Tierstreu enthaltend einen oder mehrere Signalduftstoffe, **dadurch gekennzeichnet, daß** der (die) Signalduftstoff(e) ausgewählt werden aus der Gruppe von Indol, 3-Methylindol (Skatol), 3-Mercapto-3-methyl-1-butanol sowie deren Derivate in einer Konzentration, die vom Haustier wahrgenommen wird, im wesentlichen jedoch nicht vom Menschen.

2. Tierstreu nach Anspruch 1, **dadurch gekennzeichnet, dass** der (die) Signalduftstoff(e) in einer Menge von (jeweils) 0,01 bis 100 ppm enthalten sind.

3. Tierstreu nach einem der Ansprüche 1 oder 2, **dadurch gekennzeichnet, daß** der (die) Signalduftstoff(e) in einer Menge von (jeweils) 0,05 bis 10 ppm, insbesondere von 0,1 bis 1,0 ppm, enthalten ist (sind).

4. Tierstreu nach einem der vorstehenden Ansprüche, **dadurch gekennzeichnet, daß** zumindest Indol und/oder Skatol oder dessen (deren) Derivate enthalten ist (sind).

5. Tierstreu nach einem der vorstehenden Ansprüche, **dadurch gekennzeichnet, daß** ein Adsorbens (Trägermaterial) mit einer spezifischen Oberfläche von 50 bis 400 m²/g, insbesondere von 100 bis 400 m²/g enthalten ist.

6. Tierstreu nach einem der vorstehenden Ansprüche, **dadurch gekennzeichnet, daß** die Tierstreu auf einem Schichtsilicat, insbesondere einem Smektit, und/oder cellulosehaltigen Materialien basiert.

7. Tierstreu nach einem der vorstehenden Ansprüche, **dadurch gekennzeichnet, daß** diese Bentonit und/oder Palygorskit (Attapulgit) und/oder Sepiolith enthält.

8. Tierstreu nach einem der vorstehenden Ansprüche, **dadurch gekennzeichnet, daß** es sich um eine klumpenbildende Tierstreu handelt.

9. Tierstreu nach einem der vorstehenden Ansprüche, **dadurch gekennzeichnet, daß** diese durch Aufsprühen mit dem (den) Signalduftstoff(en) imprägniert ist.

10. Tierstreu nach Anspruch 9, **dadurch gekennzeichnet, daß** zum Aufsprühen eine wäßrige Lösung mit einer Konzentration von jeweils 0,001 bis 0,01% der Signalduftstoffe sowie gegebenenfalls mit einem Alkohol als Lösungsvermittler verwendet wird.

11. Tierstreu nach einem der vorstehenden Ansprüche, **dadurch gekennzeichnet, daß** diese jeweils 0,36 ppm Buttersäure, Indol und Skatol enthält.

12. Verfahren zur Herstellung einer Tierstreu mit einem oder mehreren Signalduftstoffen gemäß Anspruch 1 oder 2, wobei die Tierstreu mit einer Lösung des (der) Signalduftstoff(e) behandelt wird.

13. Verfahren nach Anspruch 12, **dadurch gekennzeichnet, daß** eine wäßrige Lösung verwendet wird.

14. Verfahren nach einem der Ansprüche 12 oder 13, **dadurch gekennzeichnet, daß** die Lösung aufgesprüht wird.

15. Verfahren nach einem der Ansprüche 12 bis 14, **dadurch gekennzeichnet, daß** die Lösung einen Alkohol, insbesondere Isopropanol, als Lösungsvermittler enthält.

16. Katzenhygienebox mit verbesserter Attraktivität für das Haustier, enthaltend eine Tierstreu nach einem der Ansprüche 1 bis 11.

17. Verwendung von Signalduftstoffen für Haustiere, insbesondere Katzen, gemäß Anspruch 1, zur Verbesserung der Attraktivität und Akzeptanz einer Tierstreu für das Haustier.

18. Verwendung nach Anspruch 17, **dadurch gekennzeichnet, daß** als Signalduftstoffe ein oder mehrere aus der Gruppe Indol, 3-Methylindol (Skatol), 3-Mercapto-3-methyl-1-butanol oder Derivate davon in einer Menge von jeweils 0,01 bis 100 ppm, insbesondere 0,05 bis 10 ppm, insbesondere 0,1 bis 1,0 ppm, verwendet werden.

## Claims

1. An animal litter containing one or more signal fragrant substances, **characterised in that** the signal fragrant substance(s) is/are chosen from the group of indole, 3-methylindole (scatol), 3-mercapto-3-methyl-1-butanol and derivatives thereof in a concentration which is perceptible by a pet animal but is substantially not perceptible to humans.

2. An animal litter according to Claim 1, **characterised in that** the signal fragrant substance(s) is/are contained in a quantity of from (in each case) 0.01 to 100 ppm.

3. An animal litter according to Claim 1 or 2, **characterised in that** the signal fragrant substance(s) is/are contained in a quantity of from (in each case) 0.05 to 10 ppm, in particular of from 0.1 to 1.0 ppm.

4. An animal litter according to any one of the preceding Claims, **characterised in that** at least indole and/or scatol or their derivatives is/are contained.

5. An animal litter according to any one of the preceding Claims, **characterised in that** an absorbent (support material) is contained having a specific surface of from 50 to 400 m²/g, in particular of from 100 to 400 m²/g.

6. An animal litter according to any one of the preceding Claims, **characterised in that** the animal litter is based on a layered silicate, in particular a smectite, and/or materials containing cellulose.

7. An animal litter according to any one of the preceding Claims, **characterised in that** it contains bentonite and/or palygorskite (attapulgite) and/or sepiolite.

8. An animal litter according to any one of the preceding Claims, **characterised in that** it involves a clumping animal litter.

9. An animal litter according to any one of the preceding Claims, **characterised in that** it is impregnated by being sprayed with the signal fragrant substance(s).

10. An animal litter according to Claim 9, **characterised in that** for spraying an aqueous solution is used at a concentration of in each case from 0.001 to 0.01 % of the signal fragrant substance(s) and also, optionally, with an alcohol as solubiliser.

11. An animal litter according to any one of the preceding Claims, **characterised in that** it contains in each case 0.36 ppm of butyric acid, indole and scatol.

12. A method of producing an animal litter with one or more signal fragrant substances according to Claim 1 or 2, wherein the animal litter is treated with a solution of the signal fragrant substance(s).

13. A method according to Claim 12, **characterised in that** an aqueous solution is used.

14. A method according to either Claim 12 or 13, **characterised in that** the solution is sprayed on.

15. A method according to any one of Claims 12 to 14, **characterised in that** the solution contains an alcohol, in particular isopropanol, as solubiliser.

16. A cat toilet box with improved attractiveness for pet animals, containing an animal litter according to any one of Claims 1 to 11.

17. Use of signal fragrant substance(s)for pet animals, in particular cats, according to Claim 1, for improving the attractiveness and acceptance of an animal litter for the pet animal.

18. Use according to Claim 17, **characterised in that** as signal fragrant substances there are used one or more of the group indole, 3-methylindole (scatol), 3-mercapto-3-methyl-1-butanol or derivatives thereof in a quantity of in each case from 0.01 to 100 ppm, in particular from 0.05 to 10 ppm, in particular from 0.1 to 1.0 ppm.

## Revendications

1. Litière pour animaux contenant un ou plusieurs parfums de signalisation, **caractérisée en ce que** le ou les parfums de signalisation sont choisis dans le groupe constitué de l'indole, du 3-méthylindole (skatol), du 3-mercapto-3-méthyl-1-butanol ainsi que de leurs dérivés en une concentration qui est perçue par l'animal domestique, mais essentiellement pas par les hommes.

2. Litière selon la revendication 1, **caractérisée en ce que** le (ou les) parfum(s) de signalisation est (sont) contenu(s) en une quantité (à chaque fois) de 0,01 à 100 ppm.

3. Litière pour animaux selon l'une quelconque des revendications 1 ou 2, **caractérisée en ce que** le (ou les) parfum(s) de signalisation est (sont) contenu(s) en une quantité (à chaque fois) de 0,05 à 10 ppm, en particulier de 0,1 à 1,0 ppm.

4. Litière pour animaux selon l'une quelconque des revendications précédentes, **caractérisée en ce que** ladite litière contient au moins de l'indole et/ou du skatol ou ses (leurs) dérivés.

5. Litière pour animaux selon l'une quelconque des revendications précédentes, caractérisée en ce ladite litière contient un adsorbant (matériau support) présentant une surface spécifique de 50 à 400 m²/g, en particulier de 100 à 400 m²/g.

6. Litière pour animaux selon l'une quelconque des revendications précédentes, **caractérisée en ce que** la litière pour animaux est à base d'un silicate à couches, en particulier d'un smectite et/ou d'un matériau contenant de la cellulose.

7. Litière pour animaux selon l'une quelconque des revendications précédentes, **caractérisée en ce qu'**elle contient de la bentonite et/ou de la palygorskite (attapulgite) et/ou de la sépiolithe.

8. Litière pour animaux selon l'une quelconque des revendications précédentes, **caractérisée en ce qu'**il s'agit d'une litière pour animaux formant des grumeaux.

9. Litière pour animaux selon l'une quelconque des revendications précédentes, **caractérisée en ce qu'**elle est imprégnée par pulvérisation avec le (ou les) parfum(s) de signalisation.

10. Litière pour animaux selon la revendication 9, **caractérisée en ce qu'**on utilise pour la pulvérisation une solution aqueuse présentant une concentration en parfums de signalisation à chaque fois de 0,001 à 0,01% ainsi que le cas échéant un alcool comme promoteur de solubilisation.

11. Litière pour animaux selon l'une quelconque des revendications précédentes, **caractérisée en ce qu'**elle contient à chaque fois 0,36 ppm d'acide butyrique, d'indole et de skatol.

12. Procédé pour la préparation d'une litière pour animaux comprenant un ou plusieurs parfums de signalisation selon la revendication 1 ou 2, **caractérisé en ce que** la litière pour animaux est traitée avec une solution du (des) parfum(s) de signalisation.

13. Procédé selon la revendication 12, **caractérisé en ce qu'**une solution aqueuse est utilisée.

14. Procédé selon la revendication 12 ou 13, **caractérisé en ce que** la solution est pulvérisée.

15. Procédé selon l'une quelconque des revendications 12 à 14, **caractérisé en ce que** la solution contient un alcool, en particulier l'isopropanol, comme promoteur de solubilisation.

16. Boîte d'hygiène pour chats présentant une attractivité améliorée pour l'animal domestique, contenant une litière pour animaux selon l'une quelconque des revendications 1 à 11.

17. Utilisation de parfums de signalisation pour animaux domestiques, en particulier des chats, selon la revendication 1, pour améliorer l'attractivité et l'acceptabilité d'une litière pour l'animal.

18. Utilisation selon la revendication 17, **caractérisée en ce qu'**on utilise comme parfums de signalisation un ou plusieurs parmi le groupe indole, 3-méthylindole (skatol), 3-mercapto-3-méthyl-1-butanol ou des dérivés de ceux-ci en une quantité à chaque fois de 0,01 à 100 ppm, en particulier de 0,05 à 10 ppm, en particulier de 0,1 à 1,0 ppm.
